# FASCICULE DE BREVET EUROPEEN

(11) **EP 3 756 948 B1**
(45) Date de publication et mention de la délivrance du brevet: **27.04.2022**
(21) Numéro de dépôt: 20180538.9
(22) Date de dépôt: 17.06.2020
(51) Int. Cl.: B60Q 1/26, H04L 12/40, B60Q 1/00

(54) **DISPOSITIF DE SIGNALISATION LUMINEUSE MODULAIRE POUR UN VÉHICULE**
MODULARE LICHTSIGNALVORRICHTUNG FÜR FAHRZEUG
MODULAR LIGHT SIGNALLING DEVICE FOR A VEHICLE

(30) Priorité: 25.06.2019 FR 1906884
(43) Date de publication de la demande: 30.12.2020
(73) Titulaire: Vignal Systems, 69960 Corbas (FR); VIGNAL C.E.A. S.A., 6862 Rancate - Mendrisio (CH)
(72) Inventeur: MOLINES, Jean-Marc, 69960 Corbas (FR); DUPUIS, Guillaume, 69960 Corbas (FR); TASSI, Stefano, 6862 Rancate (Mendrisio) (CH)
(74) Mandataire: Germain Maureau

(56) Documents cités:
- WO-A1-2018/231225
- US-B2- 8 274 397
- US-B2- 9 705 597

## Description

La présente invention se rapporte à un dispositif de signalisation lumineuse du type dénommé « light bar » ou barre lumineuse pour véhicules. De tels dispositifs de signalisation lumineuse peuvent par exemple être fixés sur le toit du véhicule et sont décrits dans WO2018231225 A1, US8274397 B2 ou US9705597 B2.

Les barres lumineuses pour véhicules appartiennent à la catégorie des avertisseurs spéciaux utiles dans le domaine de la circulation routière.

Les avertisseurs spéciaux sont des dispositifs permettant de signaler des véhicules ayant une mission particulière. Ces véhicules peuvent être par exemple des véhicules dont la mission fait qu'ils ont un positionnement qui les rend vulnérables aux accidents : c'est par exemple le cas des véhicules de travaux sur la chaussée (construction, entretien de la voirie, etc...), des véhicules d'intervention en cas d'accident (dépanneuse, assistance routière, etc..), des véhicules lents et/ou encombrants (convoi exceptionnel, etc...). Ces véhicules peuvent aussi être des véhicules dont la mission a un caractère d'urgence les autorisant à s'affranchir de certaines contraintes de la circulation (feux tricolores, priorités...) comme les véhicules de police et de gendarmerie, pompiers, ambulances, véhicules des douanes, véhicules de transport de greffons.

Les avertisseurs spéciaux se présentent souvent sous la forme d'avertisseurs lumineux. Ils peuvent être placés à différents endroits sur le véhicule, par exemple à l'avant et/ou sur le toit, sous la forme d'un feu qui peut être fixe, tournant, défilant ou clignotant, individuel ou multiple dans une barre (ou rampe), utilisant différents types de sources lumineuses, de différentes couleurs, par exemple, bleu, rouge, ambre.

En fonctionnement, les avertisseurs spéciaux tels que les barres lumineuses mettent en jeu une pluralité de sources lumineuses qui peuvent être fixes, tourner et/ou clignoter. Ces différentes sources lumineuses peuvent présenter différentes fonctions. En général, on retrouve les fonctions suivantes :
- Flasheur : un flasheur comporte plusieurs groupes de sources lumineuses qui sont activés individuellement et séquentiellement, selon une séquence prédéterminée. Les groupes de de sources lumineuses peuvent être activés dans l'ordre de leur positionnement, par exemple afin d'indiquer à un conducteur d'un autre véhicule un mouvement à effectuer, dans la direction correspondant au sens d'allumage successif des groupes de sources lumineuses. La fonction flasheur a ainsi pour but de réguler le trafic routier ;
- Gyrophare : le gyrophare comprend une source lumineuse produisant un éclairage et un signal d'alerte lumineux à simulation de rotation ;
- Phare de travail : le phare, ou feu, de travail comprend une source lumineuse projetant une lumière blanche vive pour éclairer le site de travail à la tombée de la nuit ou tôt le matin. Un tel phare de travail permet d'éclairer une zone d'intervention d'un opérateur pour faciliter et sécuriser son travail ;
- Feu latéral : le feu latéral comprend une source lumineuse produisant un éclairage destiné à émettre la lumière depuis les côtés du véhicule, par exemple pour éclairer les voies de circulation, trouver l'emplacement de palettes de chargement, identifier des n° de bâtiment dans le noir, etc... ;
- Feu répétiteur 3 fonctions : ce feu rappelle les fonctions stop/position/indicateur de direction des feux correspondants du véhicule et sert d'alerte supplémentaire en hauteur pour signaler les changements de comportement du véhicule. Ils sont particulièrement utiles pour les interventions dangereuses sur autoroute ou lorsque l'intervention est susceptible de masquer les feux installés sur le véhicule.

Certains des éléments des dispositifs de signalisation lumineuse connus génèrent du bruit électromagnétique susceptible d'interférer avec d'autres composés électroniques ou lumineux du véhicule. En vue de limiter ces interférences électromagnétiques, il a été proposé de mettre en œuvre des blindages électromagnétiques, en particulier autour des câbles alimentant les différentes sources lumineuses de ces barres lumineuses.

Toutefois, avec l'augmentation de sources lumineuses ayant des fonctions différentes et variées sur les barres lumineuses, le nombre de fils du réseau câblé dédié a également augmenté, et la compatibilité électromagnétique avec les autres composants du véhicule n'est pas toujours satisfaisante. Le blindage nécessaire devient très compliqué à mettre en place.

Par ailleurs, l'augmentation du nombre de sources lumineuses impliquées dans la barre lumineuse a également augmenté l'occurrence du risque qu'une de ces sources soit défectueuse. Dans un tel cas, la source lumineuse, parfois l'ensemble de la barre lumineuse, doit être remplacée par une nouvelle source lumineuse ou une barre en état de marche. Une telle opération de réparation nécessite du temps et engendre un arrêt temporaire du véhicule, dommageable à la mission à laquelle le véhicule est dédié.

Pour remédier à ces inconvénients, il a été proposé des barres lumineuses modulaires, c'est-à-dire présentant plusieurs modules, de telle sorte qu'un module présentant une source lumineuse défectueuse peut être remplacé par un autre module, sans avoir à changer la barre lumineuse dans sa totalité.

Toutefois, la présence de plusieurs modules et l'augmentation de sources lumineuses ayant des fonctions différentes et variées sur les barres lumineuses modulaires entraîne également un surcroît des contraintes, telles que compatibilité des connexions électriques et mécaniques entre les sources lumineuses et les modules, tests de vérification de bon fonctionnement, etc..., lorsque le remplacement d'un ou plusieurs modules dans la barre est nécessaire.

Par ailleurs, les barres lumineuses modulaires connues ne permettent pas de répondre pleinement ni simplement aux besoins très divers des utilisateurs. En effet, la structure des modules connus limite les possibilités de personnalisation.

Ainsi, il subsiste le besoin d'un dispositif de signalisation lumineuse modulaire, dont le remplacement d'un ou plusieurs modules serait simple et rapide à effectuer. Il subsiste également le besoin d'un dispositif de signalisation lumineuse modulaire qui présenterait une compatibilité électromagnétique améliorée avec les autres composants électroniques du véhicule.

La présente invention vise à satisfaire ces besoins en proposant un dispositif de signalisation lumineuse modulaire comprenant une pluralité de modules, chaque module pouvant être mis en place ou remplacé par un autre module de façon particulièrement simple et rapide, les modules étant de préférence connectés entre eux à l'aide d'une connexion autre qu'une connexion filaire.

La présente invention porte sur un dispositif de signalisation lumineuse modulaire pour véhicule, comprenant une pluralité de modules, chaque module comprenant une carte électronique sur laquelle est/sont disposée(s) une ou plusieurs source(s) lumineuse(s), chaque source lumineuse présentant une fonction lumineuse dédiée, la pluralité de modules comprenant au moins un module maître et au moins un module esclave, ledit module maître comprenant une unité de commande apte à piloter la ou les fonction(s) lumineuse(s) dudit module maître et dudit module esclave. De plus, les modules sont mécaniquement reliés entre eux par une liaison du type emboîtement mâle/femelle, et chaque carte électronique comprend au moins un connecteur, les cartes électroniques de deux modules adjacents étant connectées par lesdits connecteurs, la connexion entre les différents modules étant exempte de liaison filaire.

De préférence, le module esclave est exempt de toute unité de commande, le module esclave étant piloté par le module maître. Ainsi, le module esclave est de structure simple et peut être remplacé par un autre module esclave de façon simple et rapide.

Le module esclave est de préférence situé sur le dispositif de signalisation lumineuse dans une position symétrique au module maître par rapport au centre du dispositif de signalisation.

L'invention fournit ainsi un dispositif de signalisation lumineuse dont la modularité, et donc l'adaptabilité aux besoins spécifiques des utilisateurs, est particulièrement importante et simple à mettre en œuvre. Il suffit en effet de choisir les modules souhaités parmi tous les modules disponibles, et de les assembler. Ceci peut être réalisé très facilement via l'emboîtement mâle/femelle, la connexion électronique s'effectuant automatiquement via les connecteurs, sans nécessiter davantage d'intervention d'un opérateur. Ceci permet de limiter le temps de montage et les risques d'erreur lors de ce montage.

Une liaison mécanique du type emboîtement mâle/femelle est également particulièrement simple à faire et à défaire. Le remplacement d'un module par un module de même type (maître ou esclave) est donc particulièrement aisé et rapide à réaliser. Ceci permet de limiter le temps d'arrêt d'un véhicule, nécessaire à une telle réparation.

Un autre avantage significatif de l'invention est de permettre une personnalisation tardive du dispositif de signalisation lumineuse, du fait de la conception et de la fabrication de plusieurs références de sous-ensembles sous la forme de modules aisément assemblables / connectables lors d'une première mise en place ou lors d'un remplacement. Chaque module peut se présenter sous la forme d'un boîtier, de préférence monobloc, fermé et non ouvrable par l'utilisateur, dont la structure interne est donc figée et ne peut pas être modifiée. L'assemblage mécanique entre eux des boîtiers choisis permet de former rapidement le dispositif de signalisation lumineuse, la connexion électronique s'établissant entre les modules et l'unité de commande du module maître assurant le fonctionnement approprié des sources lumineuses du module maître et des autres modules.

L'absence de liaison filaire pour connecter deux modules adjacents simplifie considérablement la connexion et la rend plus robuste et plus fiable. En outre, les problèmes de compatibilité électromagnétique s'en trouvent diminués sans nécessiter d'avoir recours à des blindages ou autres moyens de protection.

Dans le dispositif de signalisation lumineuse modulaire selon l'invention, les connecteurs assurent donc la connexion électronique entre deux modules adjacents, c'est-à-dire à la fois la transmission de l'alimentation électrique et la communication de données.

A cet effet, dans chaque module, on a des conducteurs dédiés à l'alimentation électrique (conducteur + et conducteur de masse), ainsi que des conducteurs dédiés à la communication de données, tels que des bus CAN ou équivalent. Ces conducteurs relient une borne appropriée du connecteur et l'unité de commande, d'une part, et relient chaque source lumineuse à l'unité de commande, d'autre part.

De préférence, ces conducteurs sont des pistes ménagées sur chaque carte électronique. De la sorte, non seulement on n'a aucune liaison filaire entre modules, mais aucune liaison filaire non plus à l'intérieur de chacun des modules, ce qui limite d'autant les problèmes de compatibilité électromagnétique.

Les modules peuvent être mécaniquement reliés entre eux par lesdits connecteurs. Avec ce mode de réalisation, les connecteurs assurent à la fois la liaison électronique et la liaison mécanique. Un tel dispositif de signalisation lumineuse est ainsi très simple structurellement et du point de vue de la mise en œuvre.

Selon une réalisation possible, un connecteur comporte des broches d'un premier type, sous forme de plaquette, et des broches d'un deuxième type, sous forme de mâchoire. Les connecteurs de deux modules adjacents destinés à être connectés entre eux sont identiques et agencés sur les cartes électroniques respectives des modules de sorte que les mâchoires d'un connecteur puissent recevoir les plaquettes de l'autre connecteur. Ceci permet d'assurer via les connecteurs à la fois la liaison mécanique et la liaison électronique entre deux modules adjacents.

On peut prévoir que chaque module comprenne un organe de pré guidage destiné à coopérer avec l'organe de pré guidage d'un module adjacent pour guider le rapprochement mutuel desdits modules avant leur assemblage mécanique et électronique.

Par exemple, l'organe de pré guidage peut être ménagé sur, ou faire partie de, la carte électronique. Dans ce cas, de préférence, l'organe de pré guidage s'étend au moins en partie au-delà du connecteur de façon à pouvoir coopérer avec l'organe de pré guidage du module adjacent avant la connexion des deux connecteurs. L'organe de pré guidage peut présenter une forme particulière ayant des parties de formes complémentaires, par exemple au moins une dent et un creux, de sorte qu'un organe de guidage d'une carte électronique puisse s'engager dans un organe de guidage de la carte électronique adjacente, pouvant être disposé de façon inversée.

La carte électronique d'un module peut comporter une partie principale et un appendice en saillie par rapport à la partie principale, l'organe de pré guidage étant ménagé sur l'appendice, et le connecteur étant monté sur l'appendice. De préférence, l'appendice peut s'étendre au-delà du boîtier défini par le module, de façon à permettre le montage.

La pluralité de modules peut comprendre en outre un ou plusieurs module(s) secondaire(s), l'unité de commande dudit module maître étant apte à piloter la ou les fonction(s) lumineuse(s) dudit ou desdits module(s) secondaire(s). Ainsi, comme pour le module esclave, les modules secondaires sont préférentiellement exempts de toute unité de commande, et sont de structure simple. Ils peuvent donc être remplacés par d'autres modules secondaires de façon particulièrement simple et rapide.

Le module maître est de préférence positionné à une première extrémité du dispositif de signalisation lumineuse, le module esclave étant dans ce cas positionné à l'extrémité opposée du dispositif de signalisation lumineuse.

Ainsi, dans le cas où le dispositif de signalisation lumineuse comprend en outre un ou plusieurs module(s) secondaire(s), ce(s) module(s) secondaire(s) est/sont positionné(s) dans la région centrale du dispositif de signalisation lumineuse, autrement dit entre le module maître, formant une première extrémité du dispositif de signalisation, et le module esclave, formant l'extrémité opposée du dispositif de signalisation. Un module secondaire peut typiquement présenter un plan de symétrie qui, en position montée sur un véhicule, correspond à un plan vertical longitudinal du véhicule. La symétrie ne concerne pas l'agencement des composants sur la carte électronique.

Le dispositif de signalisation lumineuse selon l'invention peut comporter autant de modules secondaires que nécessaire à l'application souhaitée pour le véhicule, par exemple un, deux, trois, quatre modules secondaires, voire plus le cas échéant.

Dans une forme de réalisation, les connecteurs sont configurés pour réaliser une connexion entre des liaisons du type bus CAN - ou tout autre support de communication multiplexé, tel qu'un bus Lin - ménagées sur les cartes électroniques des modules adjacents, de façon à assurer la transmission de données entre lesdits modules. Ainsi, les moyens de communication entre les différents modules sont exempts de liaison filaire.

Le dispositif de signalisation lumineuse selon l'invention permet ainsi un bon voisinage électromagnétique.

Ainsi, chaque source lumineuse de chaque module reçoit l'information nécessaire à son fonctionnement de la part de l'unité de commande du module maître via un circuit imprimé dans la ou les cartes électroniques des modules et, le cas échéant, via les connecteurs correspondants.

Une source lumineuse du module maître reçoit l'information nécessaire à son fonctionnement de la part de l'unité de commande du module maître via le circuit imprimé dans la carte électronique du module maître. Une source lumineuse d'un module esclave ou secondaire reçoit l'information nécessaire à son fonctionnement de la part de l'unité de commande du module maître via le circuit imprimé dans la carte électronique du module maître, les connecteurs du module maître et du module esclave ou secondaire, et le circuit imprimé dans la carte électronique du module esclave ou secondaire.

Dans une forme de réalisation, le module maître reçoit l'alimentation électrique nécessaire au fonctionnement de l'ensemble des modules du dispositif de signalisation lumineuse via une liaison filaire communiquant avec une source d'alimentation électrique extérieure au dispositif de signalisation. De préférence, la liaison filaire avec la source d'alimentation électrique extérieure est l'unique liaison filaire du dispositif de signalisation lumineuse selon l'invention. Ainsi, la compatibilité électromagnétique du dispositif de signalisation lumineuse selon l'invention est particulièrement performante.

Les fonctions lumineuses des modules de la pluralité de modules peuvent être choisies parmi les flasheurs, les gyrophares, les phares de travail, les feux latéraux, les feux répétiteurs 3 fonctions, les feux de trafic et leurs combinaisons. Par exemple, le module maître et/ou le module esclave, qui sont de préférence situés aux extrémités du dispositif de signalisation lumineuse, peuvent comprendre des sources lumineuses présentant des fonctions feux latéraux comme définies ci-dessus. Alternativement ou en combinaison, ils peuvent également comprendre des sources lumineuses présentant des fonctions feux répétiteurs 3 fonctions.

Dans une forme de réalisation, chaque module peut comprendre une source lumineuse témoin, apte à s'allumer lorsque ledit module est défectueux, par exemple s'il ne fonctionne pas ou ne fonctionne pas correctement : un exemple de fonctionnement erroné serait l'éclairage de couleur ambre d'un module alors que tous les autres modules s'éclairent en bleu, sachant que l'information programmée et envoyée par l'unité de commande du module maître prévoyait un éclairage de couleur bleue pour l'ensemble des modules.

Dans une forme de réalisation, le dispositif de signalisation lumineuse selon l'invention comprend un châssis apte à supporter l'ensemble des modules formant le dispositif de signalisation. Le châssis peut comprendre des moyens de fixation pour fixer le châssis, et donc le dispositif de signalisation lumineuse, sur un élément de carrosserie du véhicule, par exemple sur le toit du véhicule.

La présente invention porte également sur un véhicule comprenant un dispositif de signalisation lumineuse tel que ci-dessus, fixé sur ledit véhicule, par exemple sur un toit du véhicule.

Les avantages de la présente invention ressortiront plus en détail de la description détaillée qui suit et des dessins annexés dans lesquels :
La figure 1 est une vue de l'arrière d'un véhicule muni d'un dispositif de signalisation lumineuse modulaire selon l'invention,
La figure 2 est une vue en perspective éclatée de l'assemblage des cartes électroniques de trois modules d'un dispositif de signalisation lumineuse selon l'invention,
La figure 3 est une vue en perspective de la carte électronique d'un module maître du dispositif de signalisation lumineuse selon l'invention, muni de ses sources lumineuses,
La figure 4 est une vue en perspective éclatée et partielle d'un dispositif de signalisation lumineuse selon l'invention à quatre modules,
La figure 5 est une vue en perspective de deux modules du dispositif de signalisation lumineuse selon l'invention avant emboîtement mécanique,
La figure 6 est une vue en perspective des deux modules de la figure 5 après emboîtement mécanique,
La figure 7 est une vue en perspective d'un dispositif de signalisation lumineuse selon l'invention à trois modules,
La figure 8 est une vue en perspective d'une carte électronique d'un module secondaire, montrant une première face,
La figure 9 est une vue en plan de la carte électronique de la figure 8, montrant une deuxième face,
La figure 10 illustre la connexion de deux connecteurs de modules adjacents.

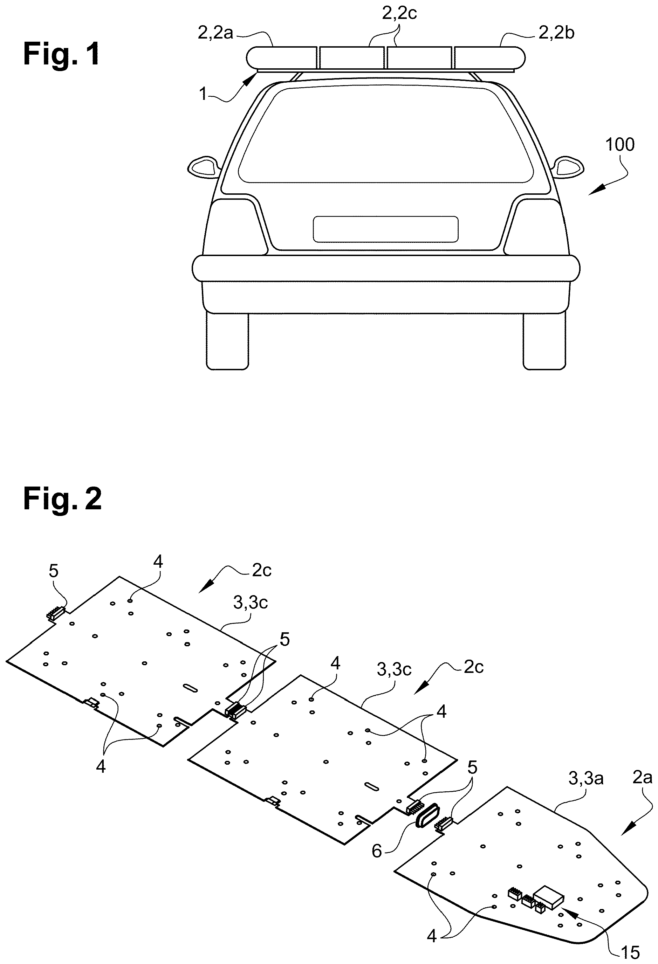

En référence à la figure 1 est montré un véhicule 100 muni d'un dispositif de signalisation lumineuse selon l'invention, sous la forme d'une barre lumineuse modulaire 1.

La barre lumineuse modulaire 1 est destinée à être positionnée sur l'avant ou le toit, sur le toit dans l'exemple représenté, d'un véhicule 100 ayant une mission particulière, comme par exemple des véhicules de travaux sur la chaussée, des véhicules d'intervention en cas d'urgence, tels que les ambulances, les pompiers, la police, etc.., qui doivent signaler leur présence aux autres utilisateurs des voies routières, pour des raisons de sécurité. Ainsi, la barre lumineuse modulaire 1 selon l'invention a pour but de projeter de la lumière et/ou des éclairages spéciaux visibles par tous.

Sur l'exemple représenté à la figure 1, la barre lumineuse 1 comprend quatre modules 2, dont un module maître 2a, situé à une première extrémité de la barre lumineuse 1, un module esclave 2b, situé à l'extrémité opposée de la barre lumineuse 1, et deux modules secondaires 2c, situés entre le module maître 2a et le module esclave 2b, autrement dit au centre de la barre lumineuse 1. Tous les modules 2 de la barre lumineuse 1 sont munis d'une ou plusieurs fonctions lumineuses.

Par fonctions lumineuses, on entend plus précisément au sens de la présente demande les fonctions suivantes :
- Flasheur : un flasheur comporte plusieurs groupes de sources lumineuses qui sont activés individuellement et séquentiellement, selon une séquence prédéterminée. Les groupes de de sources lumineuses peuvent être activés dans l'ordre de leur positionnement, par exemple afin d'indiquer à un conducteur d'un autre véhicule un mouvement à effectuer, dans la direction correspondant au sens d'allumage successif des groupes de sources lumineuses. La fonction flasheur a ainsi pour but de réguler le trafic routier ;
- Gyrophare : le gyrophare comprend une source lumineuse produisant un éclairage et un signal d'alerte lumineux à simulation de rotation ;
- Phare de travail : le phare, ou feu, de travail comprend une source lumineuse projetant une lumière blanche vive pour éclairer le site de travail à la tombée de la nuit ou tôt le matin. Un tel phare de travail permet d'éclairer une zone d'intervention d'un opérateur pour faciliter et sécuriser son travail ;
- Feu latéral : le feu latéral comprend une source lumineuse produisant un éclairage destiné à émettre la lumière depuis les côtés du véhicule, par exemple pour éclairer les voies de circulation, trouver l'emplacement de palettes de chargement, identifier des n° de bâtiment dans le noir, etc... ;
- Feu répétiteur 3 fonctions : ce feu rappelle les fonctions stop/position/indicateur de direction des feux correspondants du véhicule et sert d'alerte supplémentaire en hauteur pour signaler les changements de comportement

du véhicule. Ils sont particulièrement utiles pour les interventions dangereuses sur autoroute ou lorsque l'intervention est susceptible de masquer les feux installés sur le véhicule ;
- Feu de trafic : ce feu donne une indication pour dévier ou orienter le flux des véhicules vers la gauche ou la droite ou les deux afin par exemple d'éviter un obstacle.

Le module maître 2a comprend en outre une unité de commande 15 (voir figure 2) apte à piloter la ou les fonctions lumineuses de l'ensemble des autres modules, à savoir le module esclave 2b et les modules secondaires 2c.

Dans la barre lumineuse 1 selon l'invention, le module maître 2a et le module esclave 2b sont indispensables, les modules secondaires 2c étant optionnels. Le module esclave 2b est généralement situé symétriquement au module maître 2a par rapport au centre de la barre lumineuse 1. La barre lumineuse 1 peut comporter autant de modules secondaires 2c que nécessaire pour l'application prévue du véhicule 100.

Ainsi, de préférence, le module esclave 2b et les modules secondaires 2c sont exempts de toute unité de commande, et sont de structure simple. Ils peuvent donc être remplacés par d'autres modules de même type (esclave ou secondaire) de façon particulièrement simple et rapide.

En référence à la figure 2, pour chaque module 2, la ou les fonctions lumineuses sont produites par des sources lumineuses portées par une carte électronique 3.

En référence à la figure 2, sont représentées les cartes électroniques 3 pour le module maître 2a et les deux modules secondaires 2c de la figure 1. Ainsi, plus précisément, sont représentées sur cette figure la carte électronique 3a du module maître 2a, et les cartes électroniques 3c des deux modules 2c.

Chaque carte électronique 3 comprend un circuit imprimé en communication avec des ports 4 destinés à recevoir des sources lumineuses. Chaque carte électronique (3, 3a, 3c) communique avec la carte électronique (3, 3a, 3c) adjacente au moyen d'une liaison de type bus CAN. Ainsi, la carte électronique 3a du module maître 2a, qui est situé à une extrémité de la barre lumineuse 1, comprend un connecteur 5 apte à se connecter à un connecteur 5 complémentaire de la carte électronique 3c du module secondaire 2c adjacent. Les cartes électroniques 3c des modules secondaires 2c comprennent chacune deux tels connecteurs 5, opposés, chaque connecteur 5 de ces cartes étant destiné à se connecter avec le connecteur 5 de la carte électronique 3 du module adjacent afin de connecter ladite carte électronique 3c du module secondaire 2c avec la carte électronique (3a, 3c) du module (2a, 2c) adjacent.

La connexion des modules 2 via les connecteurs 5 - tant pour l'alimentation électrique que pour la transmission de données - permet de s'affranchir de toute liaison filaire entre les modules 2 formant la barre 1. Ainsi, les moyens de communication entre les différents modules 2 sont exempts de liaison filaire.

La barre lumineuse 1 selon l'invention permet ainsi un bon voisinage électromagnétique.

Sur la figure 2, les cartes électroniques 3c des deux modules secondaires 2c sont connectées entre elles via leurs connecteurs 5. La connexion entre la carte électronique 3a du module maître 2a et la carte électronique 3c du module secondaire adjacent est montrée avant réalisation. Comme montré sur cette figure, la connexion peut comprendre un joint d'étanchéité 6.

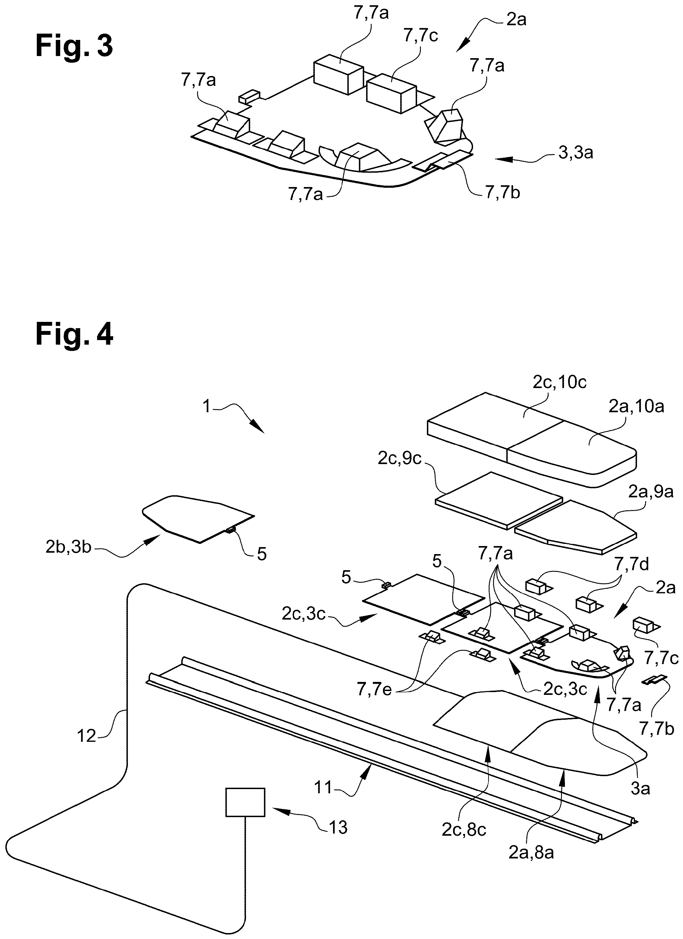

En référence à la figure 3 est montrée la carte électronique 3a du module maître 2a munie des sources lumineuses 7 qui vont apporter les fonctions lumineuses du module maître 2a, les sources lumineuses 7 étant disposées dans les ports 4 (voir figure 2).

Sur cette figure sont montrées les sources lumineuses 7 apportant les fonctions suivantes :
- quatre sources lumineuses 7a : fonctions gyrophares
- une source lumineuse 7b : fonction feu latéral
- une source lumineuse 7c : fonction feu répétiteur 3 fonctions.

En référence à la figure 4, la barre lumineuse 1 de la figure 1 est montrée en perspective éclatée et partielle.

En particulier, sont montrées les quatre cartes électroniques (3, 3a, 3b, 3c) de la barre lumineuse 1, à savoir la carte électronique 3a du module maître 2a, les cartes électroniques 3c des deux modules secondaires 2c, positionnés au centre de la barre lumineuse 1, et la carte électronique 3b du module esclave 2b. Sur la figure, les cartes électroniques (3, 3a, 3c) du module maître 2a et des modules secondaires 2c sont montrées connectées entre elles, à l'aide des connecteurs 5, tandis que la carte électronique 3b du module esclave est représentée non encore connectée à la carte électronique 3c du module secondaire 2c adjacent.

Pour des raisons de clarté, les sources lumineuses ne sont pas représentées sur les cartes électroniques (3b, 3c) du module esclave 2b et du module secondaire 2c directement adjacent audit module esclave 2b.

La carte électronique 3a du module maître 2a reprend les sources lumineuses (7, 7a, 7b, 7c) représentées sur la figure 3. La carte électronique 3c du module secondaire 2c adjacent au module maître 2a comporte les sources lumineuses 7 suivantes :
- deux sources lumineuses 7a : fonctions gyrophares,
- deux sources lumineuses 7d : fonctions flasheurs,
- deux sources lumineuses 7e : fonctions phares de travail.

Par exemple, la carte électronique 3c du module secondaire 2c adjacent au module esclave 2b pourrait comprendre le même jeu de sources lumineuses (7, 7a, 7d, 7e) que celui de la carte électronique 3c du module secondaire 2c adjacent au module maître 2a, ou pourrait comprendre un jeu de sources lumineuses différent.

De même, la carte électronique 3b du module esclave 2b comprend de préférence le même jeu de sources lumineuses 7 que celui du module maître 2a, mais pourrait éventuellement comprendre un jeu de sources lumineuses 7 différent.

La carte électronique 3 de chaque module 2 peut également comprendre une source lumineuse témoin (non représentée sur les figures), apte à s'allumer lorsque ledit module 2 est défectueux, par exemple lorsque ledit module 2 ne fonctionne plus ou ne fonctionne pas correctement.

Le module maître 2a reçoit l'alimentation électrique nécessaire au fonctionnement de l'ensemble des modules 2 de la barre lumineuse 1 via un câble 12 lié à une source d'alimentation électrique 13 extérieure à la barre 1. Sur la figure 4, le câble 12 passe sous le module 2c pour se raccorder au module maître 2a.

De préférence, le câble 12 avec la source d'alimentation électrique 13 extérieure est l'unique liaison filaire de la barre lumineuse 1 selon l'invention. Ainsi, la compatibilité électromagnétique de la barre lumineuse 1 selon l'invention est particulièrement performante.

Chaque module 2 de la barre lumineuse 1 peut comporter un support 8 apte à recevoir la carte électronique 3 du module, ainsi qu'un capot 9 apte à protéger la carte électronique 3 et les sources lumineuses disposées sur la carte électronique 3.

Ainsi, en référence à la figure 4, sont également représentés, reliés ensemble, le support 8a du module maître 2a et le support 8c du module secondaire 2c adjacent au module maître 2a. Sur cette figure, sont également représentés, également reliés ensemble, le capot 9a du module maître 2a et le capot 9c du module secondaire 2c adjacent au module maître 2a.

Sur cette figure, sont également représentés, également reliés ensemble, le couvercle 10a du module maître 2a et le couvercle 10c du module secondaire 2c adjacent au module maître 2a. Les couvercles 10a et 10c permettent par exemple de protéger les capots (9a, 9c) des chocs, des intempéries comme la pluie, etc... Ils permettent également de conférer à la barre lumineuse 1 un style particulier si souhaité.

La barre lumineuse 1 comprend également un châssis 11 apte à supporter l'ensemble des modules 2 de la barre. Ainsi, la longueur du châssis 11 peut varier en fonction du nombre de modules 2 formant la barre lumineuse 1. Le châssis 11 permet de faciliter le montage des modules 2 sur le véhicule 100, et de rigidifier le dispositif de signalisation lumineuse 1, ce qui peut revêtir une importance particulière lorsque les modules 2 sont assemblés l'un à l'autre uniquement par les connecteurs 5.

Les supports 8 des modules 2 peuvent être fixés de façon amovible au châssis 11 par tout moyen de fixation amovible connu, comme par exemple des vis auto taraudeuses.

Le châssis 11 peut être fixé à un élément de carrosserie du véhicule 100 (voir figure 1) par tout moyen de fixation (non représenté) connu, comme par exemple des pattes de fixation fixées sur le toit et/ou sur une barre de toit et/ou sur une gouttière de toit.

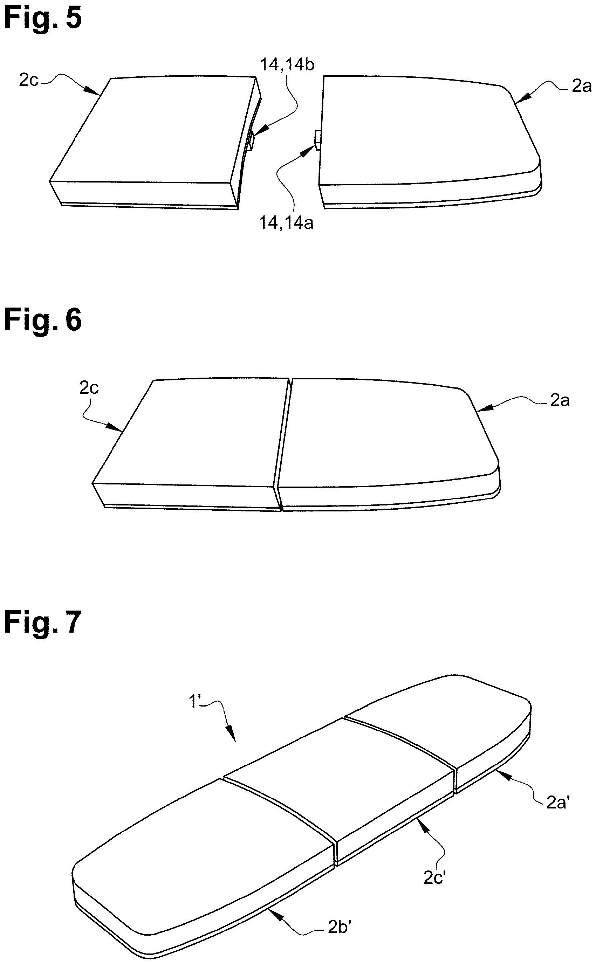

En référence à la figure 5, sont représentés le module maître 2a et le module secondaire 2c adjacent, non encore reliés. Ces deux modules (2a, 2ac) peuvent être reliés mécaniquement entre eux au moyen d'une liaison de type emboîtement mâle/femelle 14. Sur la figure, le module maître 2a comprend la partie d'emboîtement mâle 14a, et le module secondaire 2c comprend la partie d'emboîtement femelle 14b. Un tel emboîtement permet de faire et de défaire la liaison entre les deux modules de façon extrêmement simple et rapide. Sur la figure 6, les deux modules (2a, 2c) de la figure 5 sont montrés dans la configuration emboîtée.

Selon une réalisation possible, l'emboîtement mâle/femelle peut être réalisé par le connecteur 5, comme cela sera décrit en détail plus loin.

En référence à la figure 7, est montrée une barre lumineuse 1' selon l'invention similaire à la barre lumineuse 1 des figures 1-6, la barre lumineuse 1' se distinguant de cette dernière essentiellement par le fait qu'elle ne comprend que trois modules, à savoir un module maître 2a', un module esclave 2b', tous deux situés à chaque extrémité de la barre lumineuse 1', et un module secondaire 2c', central. Sur cette figure, la barre lumineuse 1' est montrée montée, tous les modules (2a', 2b', 2c') assemblés et reliés entre eux.

Ainsi, dans la barre lumineuse modulaire (1, 1') selon l'invention, la première mise en place d'un module ou le remplacement d'un module par un module de même type (maître, esclave ou secondaire) sont particulièrement aisés et rapides à réaliser, à la fois du point de vue de la connexion électrique (au moyen des connecteurs 5 reliant les cartes électroniques 3 entre elles), et du point de vue de la connexion mécanique (au moyen de l'emboîtement de type mâle/femelle décrit ci-dessus). Ainsi, le temps d'arrêt d'un véhicule, nécessaire à une telle installation ou réparation, est particulièrement raccourci.

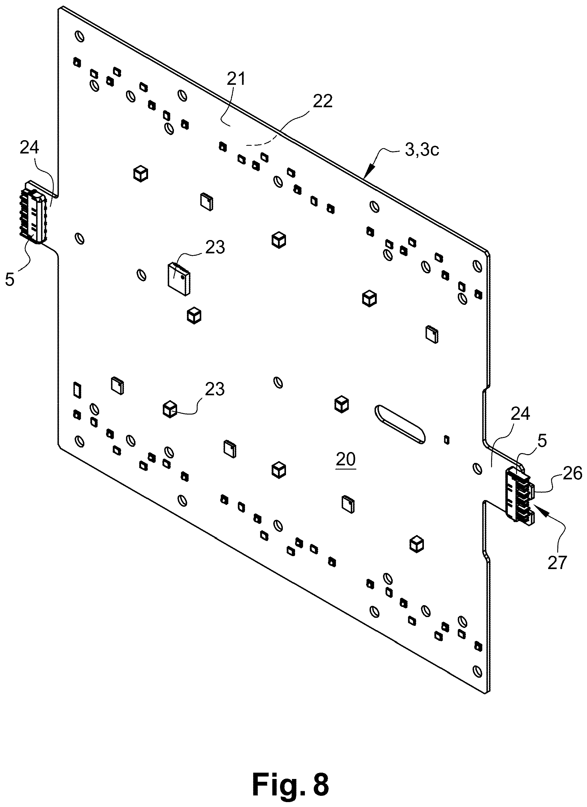

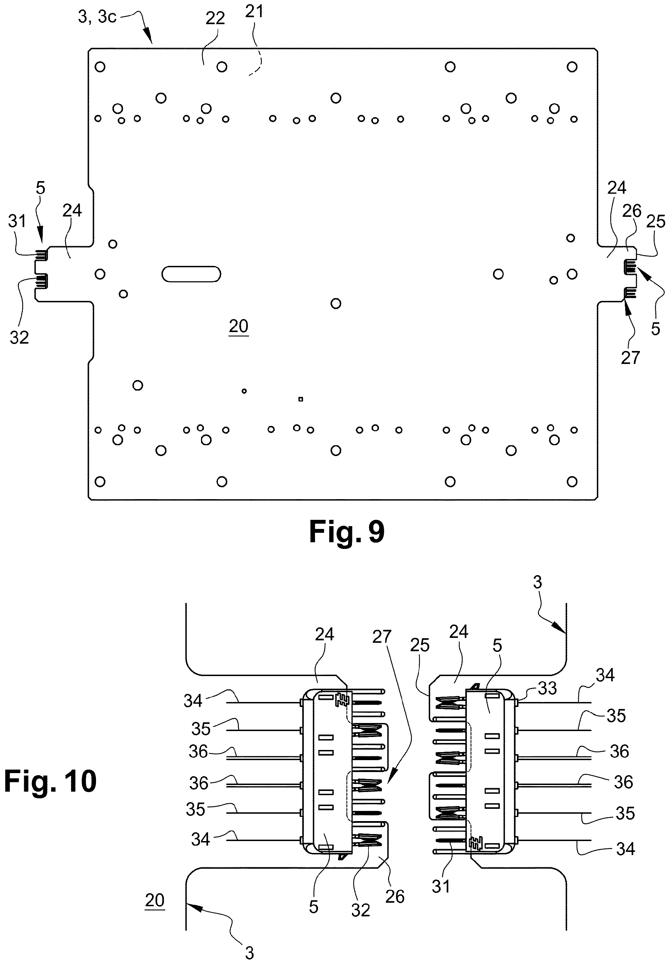

Les figures 8 et 9 représentent une carte électronique 3, ici la carte électronique 3c d'un module secondaire 2c.

La carte électronique 3 comporte une partie principale 20 qui peut être sensiblement rectangulaire, et qui comporte une première face 21 - orientée vers le haut en position d'utilisation - et une deuxième face 22 opposée. La première face 21 peut porter les différents composants électroniques 23 ainsi que les sources lumineuses 7 (non représentées sur les figures 8 et 9).

La carte électronique 3 comporte en outre au moins un appendice 24 en saillie par rapport à la partie principale 20, dans la direction transversale du véhicule 100 en position d'utilisation. La carte électronique 3c d'un module secondaire 2c comporte deux appendices 24 faisant saillie de deux bords opposés de la partie principale 20, dans des directions opposées.

Le bord libre 25 de chaque appendice 24 peut former un créneau comportant au moins une dent 26 et un creux 27, ici une succession de deux dents et deux creux comme on le voit notamment sur la figure 9.

Un connecteur 5 est monté sur chaque appendice 24, au voisinage de son bord libre 25. Le connecteur 5 comporte des broches d'un premier type, sous forme de plaquette 31, et des broches d'un deuxième type, sous forme de mâchoire 32, ces broches s'étendant à l'opposé de la partie principale 20, c'est-à-dire vers l'extérieur du module 2. De préférence, tous les connecteurs 5 sont identiques et agencés symétriquement de façon à pouvoir être mutuellement connectés comme on le verra ci-après.

Comme cela est représenté schématiquement sur la figure 10, chaque broche 31, 32 d'un connecteur est électriquement reliée, au sein du connecteur 5, à une borne 33 elle-même reliée à une piste de la carte électronique 3. Dans la réalisation représentée on a six bornes 33 dont : deux bornes reliées à une piste d'alimentation positive 34, typiquement 24 V ; deux bornes reliées à une piste de masse 35 ; et deux bus CAN 36 (ou équivalent).

L'assemblage de deux cartes électroniques 3 de deux modules 2 adjacents est illustré sur la figure 10.

Les appendices 24 ont des formes complémentaires, typiquement symétriques, au voisinage de leurs bords libres 25, de sorte qu'elles puissent coopérer. Ainsi, les dents 26 et creux 27 - ou toute autre forme appropriée - forment un organe de pré guidage destiné à coopérer avec l'organe de pré guidage d'un module 2 adjacent pour guider le rapprochement mutuel desdits modules 2 avant leur assemblage mécanique et électronique.

Lorsque les modules 2 - donc les cartes électroniques 3 - sont encore rapproché(e)s, les connecteurs 5 se connectent l'un à l'autre, les mâchoires 32 d'un connecteur 5 recevant les plaquettes 31 de l'autre connecteur 5. Avec cette réalisation, les connecteurs 5 assurent :
- d'une part la liaison électronique, c'est-à-dire la liaison des conducteurs ou pistes 34, 35 permettant l'alimentation électrique et la liaison des bus CAN 36 permettant la communication d'information ;
- et d'autre part la liaison mécanique, les broches 31, 32 formant l'emboîtement mâle/femelle 14 ;
et ce en un seule geste d'assemblage, et quels que soient les modules 2 choisis par l'utilisateur, en fonction de ses besoins.

Le dispositif de signalisation lumineuse 1 est donc très simple à mettre en œuvre, à personnaliser. De plus, il offre une robustesse mécanique accrue et ne génère que peu de perturbations électromagnétiques.

## Revendications

1. Dispositif de signalisation lumineuse modulaire (1; 1') pour véhicule (100), comprenant une pluralité de modules (2, 2a, 2b, 2c ; 2a', 2b', 2c'), chaque module comprenant une carte électronique (3, 3a, 3b, 3c) sur laquelle est/sont disposée(s) une ou plusieurs source(s) lumineuse(s) (7, 7a, 7b, 7c, 7d, 7e), chaque source lumineuse présentant une fonction lumineuse dédiée, la pluralité de modules comprenant au moins un module maître (2a ; 2a') et au moins un module esclave (2b ; 2b'), ledit module maître comprenant une unité de commande (15) apte à piloter la ou les fonction(s) lumineuse(s) dudit module maître et dudit module esclave, **caractérisé en ce que** les modules (2) sont mécaniquement reliés entre eux par une liaison du type emboîtement mâle/femelle (14, 14a, 14b), et **en ce que** chaque carte électronique (3) comprend au moins un connecteur (5), les cartes électroniques (3) de deux modules (2) adjacents étant connectées par lesdits connecteurs (5), la connexion entre les différents modules (2) étant exempte de liaison filaire.

2. Dispositif de signalisation lumineuse (1; 1') selon la revendication 1, **caractérisé en ce que** les modules (2) sont mécaniquement reliés entre eux par lesdits connecteurs (5).

3. Dispositif de signalisation lumineuse (1 ; 1') selon la revendication 1 ou 2, **caractérisé en ce qu'**un connecteur (5) comporte des broches (31) d'un premier type, sous forme de plaquette, et des broches (32) d'un deuxième type, sous forme de mâchoire, les connecteurs (5) de deux modules (2) adjacents destinés à être connectés entre eux étant identiques et agencés sur les cartes électroniques (3) respectives des modules (2) de sorte que les mâchoires (32) d'un connecteur (5) puissent recevoir les plaquettes (31) de l'autre connecteur (5).

4. Dispositif de signalisation lumineuse (1 ; 1') selon l'une quelconque des revendications 1 à 3, **caractérisé en ce que** chaque module (2) comprend un organe de pré guidage (26, 27) destiné à coopérer avec l'organe de pré guidage d'un module adjacent pour guider le rapprochement mutuel desdits modules (2) avant leur assemblage mécanique et électronique.

5. Dispositif de signalisation lumineuse (1; 1') selon la revendication 4, **caractérisé en ce que** la carte électronique (3) d'un module (2) comporte une partie principale (20) et un appendice (24) en saillie par rapport à la partie principale (20), l'organe de pré guidage (26, 27) étant ménagé sur l'appendice (24), et le connecteur (5) étant monté sur l'appendice (24).

6. Dispositif de signalisation lumineuse (1 ; 1') selon l'une quelconque des revendications 1 à 5, **caractérisé en ce que** la pluralité de modules comprend en outre un ou plusieurs module(s) secondaire(s) (2c ; 2c'), l'unité de commande dudit module maître étant apte à piloter la ou les fonction(s) lumineuse(s) dudit ou desdits module(s) secondaire(s).

7. Dispositif de signalisation lumineuse (1 ; 1') selon l'une quelconque des revendications 1 à 6, **caractérisé en ce que** les connecteurs (5) sont configurés pour réaliser une connexion entre des liaisons du type bus CAN - ou tout autre support de communication multiplexé, tel qu'un bus Lin - ménagées sur les cartes électroniques (3) des modules (2) adjacents, de façon à assurer la transmission de données entre lesdits modules (2).

8. Dispositif de signalisation lumineuse (1 ; 1') selon l'une quelconque des revendications 1 à 7, **caractérisé en ce que** chaque source lumineuse (7) de chaque module (2) reçoit l'information nécessaire à son fonctionnement de la part de l'unité de commande (15) du module maître (2a) via un circuit imprimé dans la ou les cartes électroniques (3) des modules (2) et, le cas échéant, via les connecteurs (5) correspondants.

9. Dispositif de signalisation lumineuse (1 ; 1') selon l'une quelconque des revendications 1 à 8, **caractérisé en ce que** le module maître (2a ; 2a') reçoit l'alimentation électrique nécessaire au fonctionnement de l'ensemble des modules du dispositif de signalisation lumineuse (1) via une liaison filaire (12) communiquant avec une source d'alimentation électrique (13) extérieure au dispositif de signalisation (1 ; 1').

10. Dispositif de signalisation lumineuse (1 ; 1') selon l'une quelconque des revendications 1 à 9, **caractérisé en ce que** les fonction(s) lumineuse(s) des modules de la pluralité de modules sont choisies parmi les flasheurs (7d), les gyrophares (7a), les phares de travail (7e), les feux latéraux (7b), les feux répétiteurs 3 fonctions (7c), les feux de trafic et leurs combinaisons.

11. Dispositif de signalisation lumineuse (1 ; 1') selon l'une quelconque des revendications 1 à 10, **caractérisé en ce que** chaque module (2) comprend une source lumineuse témoin, apte à s'allumer lorsque ledit module est défectueux.

12. Dispositif de signalisation lumineuse (1 ; 1') selon l'une quelconque des revendications 1 à 11, **caractérisé en ce qu'**elle comprend un châssis (11) apte à supporter l'ensemble des modules (2) formant le dispositif de signalisation (1).

13. Dispositif de signalisation lumineuse (1 ; 1') selon l'une quelconque des revendications 1 à 12, **caractérisé en ce que** chaque module de la pluralité de modules comprend un support (8, 8a, 8c), apte à recevoir ladite carte électronique (3, 3a, 3c), et un capot (9, 9a, 9c), apte à protéger ladite carte électronique et les sources lumineuses (7) disposées sur ladite carte, ledit capot étant configuré pour laisser passer la lumière.

14. Véhicule comprenant un dispositif de signalisation lumineuse (1; 1) selon l'une quelconque des revendications précédentes, fixé sur ledit véhicule, par exemple sur un toit dudit véhicule.

## Patentansprüche

1. Modulares Lichtsignalisierungsvorrichtung (1; 1') für ein Fahrzeug (100), umfassend eine Vielzahl von Modulen (2, 2a, 2b, 2c; 2a', 2b', 2c'), wobei jedes Modul eine elektronische Karte (3, 3a, 3b, 3c), auf der eine oder mehrere Lichtquellen (7, 7a, 7b, 7c, 7d, 7e) angeordnet sind, jede Lichtquelle eine zugeordnete Lichtfunktion darstellt, die Vielzahl von Modulen mindestens ein Master-Modul (2a; 2a') und mindestens ein Slave-Modul (2b; 2b') umfasst, wobei das Master-Modul eine Steuereinheit (15) umfasst, die ausgelegt ist, die Lichtfunktion(en) des Master-Moduls und des Slave-Moduls zu steuern, **dadurch gekennzeichnet, dass** die Module (2) mechanisch miteinander durch eine männlich/weiblich-verriegelnde Verbindung (14, 14a, 14b) verbunden sind, und dadurch, dass jede elektronische Karte (3) mindestens einen Verbinder (5) umfasst, wobei die elektronische Karte (3) von zwei benachbarten Modulen (2) durch die Verbinder (5) verbunden sind, wobei die Verbindung zwischen den unterschiedlichen Module (2) ohne Drahtverbindung ist.

2. Lichtsignalisierungsvorrichtung (1; 1') nach Anspruch 1, **dadurch gekennzeichnet, dass** die Module (2) mechanisch miteinander durch die Verbinder (5) verbunden sind.

3. Lichtsignalisierungsvorrichtung (1; 1') nach Anspruch 1 oder 2, **dadurch gekennzeichnet, dass** ein Verbinder (5) Stifte (31) eines ersten Typs in Form einer Platte, und Stifte (32) eines zweiten Typs in Form einer Klemmbacke umfasst, wobei die Verbinder (5) von zwei benachbarten Modulen (2), die miteinander verbunden werden sollen, identisch sind und auf den jeweiligen elektronischen Karten (3) der Module (2) vorgesehen sind, so dass die Klemmbacken (32) eines Verbinders (5) die Platten (31) des anderen Verbinders (5) aufnehmen können.

4. Lichtsignalisierungsvorrichtung (1; 1') nach einem der Ansprüche 1 bis 3, **dadurch gekennzeichnet, dass** jedes Modul (2) ein Vorführungselement (26, 27) umfasst, das dazu bestimmt ist, mit dem Vorführungselement eines benachbarten Moduls zusammenzuwirken, um die gegenseitige Annäherung der Module (2) vor ihrer mechanischen und elektronischen Montage zu führen.

5. Lichtsignalisierungsvorrichtung (1; 1') nach Anspruch 4, **dadurch gekennzeichnet, dass** die elektronische Karte (3) eines Moduls (2) einen Hauptteil (20) und einen relativ zum Hauptteil (20) abstehenden Fortsatz (24) aufweist, wobei das Vorführungselement (26, 27) am Fortsatz (24) vorgesehen ist, und der Verbinder (5) am Fortsatz (24) montiert ist.

6. Lichtsignalisierungsvorrichtung (1; 1') nach einem der Ansprüche 1 bis 5, **dadurch gekennzeichnet, dass** die Vielzahl von Modulen ferner ein oder mehrere Sekundärmodule (2c; 2c') umfasst, wobei die Steuereinheit des Master-Moduls ausgelegt ist, die Lichtfunktion(en) des bzw. der Sekundärmodule zu steuern.

7. Lichtsignalisierungsvorrichtung (1; 1') nach einem der Ansprüche 1 bis 6, **dadurch gekennzeichnet, dass** die Verbinder (5) konfiguriert sind, um eine Verbindung zwischen den Verbindungen des CAN-Bus-Typs - oder jedem anderen Multiplex-Kommunikationsmedium, wie etwa einem Lin-Bus - herzustellen, die auf der elektronischen Karte (3) der benachbarten Module (2) derart angebracht sind, dass sie die Übertragung von Daten zwischen den Modulen (2) ermöglichen.

8. Lichtsignalisierungsvorrichtung (1; 1') nach einem der Ansprüche 1 bis 7, **dadurch gekennzeichnet, dass** jede Lichtquelle (7) jedes Moduls (2) die für seinen Betrieb notwendigen Informationen von der Steuereinheit (15) des Master-Moduls (2a) über eine gedruckte Schaltung in der elektronischen Karte (3) der Module (2) erhält und, falls erforderlich, über die entsprechenden Verbinder (5) empfängt.

9. Lichtsignalisierungsvorrichtung (1; 1') nach einem der Ansprüche 1 bis 8, **dadurch gekennzeichnet, dass** das Master-Modul (2a; 2a') die für den Betrieb der gesamten Module der Lichtsignalisierungsvorrichtung (1) notwendige Stromversorgung über eine Drahtverbindung (12), die mit einer elektrischen Stromquelle (13) außerhalb der Signalisierungsvorrichtung (1; 1') kommuniziert, empfängt.

10. Lichtsignalisierungsvorrichtung (1; 1') nach einem der Ansprüche 1 bis 9, **dadurch gekennzeichnet, dass** die Lichtfunktion(en) der Module der Vielzahl von Modulen aus den Blinkern (7d), den Rundumlichtern (7a), den Arbeitsscheinwerfern (7e), den Seitenlichtern (7b), den 3-Funktions-Repeaterlichtern (7c), den Ampeln und deren Kombinationen ausgewählt ist (sind).

11. Lichtsignalisierungsvorrichtung (1; 1') nach einem der Ansprüche 1 bis 10, **dadurch gekennzeichnet, dass** jedes Modul (2) eine Kontrolllichtquelle umfasst, die zum Aufleuchten ausgelegt ist, wenn das Modul defekt ist.

12. Lichtsignalisierungsvorrichtung (1; 1') nach einem der Ansprüche 1 bis 11, **dadurch gekennzeichnet, dass** sie einen Rahmen (11) umfasst, der ausgelegt ist, um die gesamten Module (2), die die Signalisierungsvorrichtung (1) bilden, zu tragen.

13. Lichtsignalisierungsvorrichtung (1; 1') nach einem der Ansprüche 1 bis 12, **dadurch gekennzeichnet, dass** jedes Modul der Vielzahl von Modulen einen Träger (8, 8a, 8c) umfasst, der ausgelegt ist, die elektronische Karte (3, 3a, 3c) und eine Abdeckung (9, 9a, 9c), die ausgelegt ist, die elektronische Karte und die Lichtquellen (7), die auf der Karte angeordnet sind, zu schützen, aufzunehmen, wobei die Abdeckung konfiguriert ist, Licht passieren zu lassen.

14. Fahrzeug, umfassend eine Lichtsignalisierungsvorrichtung (1; 1) nach einem der vorhergehenden Ansprüche, die an dem Fahrzeug befestigt ist, beispielsweise auf einem Dach des Fahrzeugs.

## Claims

1. A modular light-signaling device (1; 1') for a vehicle (100), comprising a plurality of modules (2, 2a, 2b, 2c; 2a', 2b', 2c'), each module comprising an electronic board (3, 3a, 3b, 3c) on which is/are disposed one or several light source(s) (7, 7a, 7b, 7c, 7d, 7e), each light source having a dedicated lighting function, the plurality of modules comprising at least one master module (2a; 2a') and at least one slave module (2b; 2b'), said master module comprising a control unit (15) adapted to pilot the lighting function(s) of said master module and of said slave module, **characterized in that** the modules (2) are mechanically connected to one another by a male/female interlocking type linkage (14, 14a, 14b), and **in that** each electronic board (3) comprises at least one connector (5), the electronic boards (3) of two adjacent modules (2) being connected by said connectors (5), the connection between the different modules (2) being free of any wired link.

2. The light-signaling device (1; 1') according to claim 1, **characterized in that** the modules (2) are mechanically connected to one another by said connectors (5).

3. The light-signaling device (1; 1') according to claim 1 or 2, **characterized in that** a connector (5) includes pins (31) of a first type, in the form of a plate, and pins (32) of a second type, in the form of a jaw, the connectors (5) of two adjacent modules (2) intended to be connected to one another being identical and arranged on the respective electronic boards (3) of the modules (2) so that the jaws (32) of one connector (5) could receive the plates (31) of the other connector (5).

4. The light-signaling device (1; 1') according to any one of claims 1 to 3, **characterized in that** each module (2) comprises a pre-guide member (26, 27) intended to cooperate with the pre-guide member of an adjacent module so as to guide the mutual approach of said modules (2) before the mechanical and electronic assembly thereof.

5. The light-signaling device (1; 1') according to claim 4, **characterized in that** the electronic board (3) of a module (2) includes a main portion (20) and a protrusion (24) projecting from the main portion (20), the pre-guide member (26, 27) being formed on the protrusion (24), and the connector (5) being mounted on the protrusion (24).

6. The light-signaling device (1; 1') according to any one of claims 1 to 5, **characterized in that** the plurality of modules further comprises one or several secondary module(s) (2c; 2c'), the control unit of said master module being adapted to pilot the lighting function(s) of said secondary module(s).

7. The light-signaling device (1; 1') according to any one of claims 1 to 6, **characterized in that** the connectors (5) are configured so as to achieve a connection between CAN bus type links - or any other multiplexed communication support, such as a Lin bus - provided on the electronic boards (3) of the adjacent modules (2), so as to ensure data transmission between said modules (2).

8. The light-signaling device (1; 1') according to any one of claims 1 to 7, **characterized in that** each light source (7) of each module (2) receives the information necessary to the operation thereof from the control unit (15) of the master module (2a) via a printed circuit in the electronic board(s) (3) of the modules (2) and, where appropriate, via the corresponding connectors (5).

9. The light-signaling device (1; 1') according to any one of claims 1 to 8, **characterized in that** the master module (2a; 2a') receives the electric power necessary to the operation of all of the modules of the light-signaling device (1) via a wired link (12) communicating with an electric power source (13) external to the signaling device (1; 1').

10. The light-signaling device (1; 1') according to any one of claims 1 to 9, **characterized in that** the lighting function(s) of the modules of the plurality of modules are selected from flashers (7d), flashing beacons (7a), work lamps (7e), side-lights (7b), 3-function repeating lights (7c), traffic lights and the combinations thereof.

11. The light-signaling device (1; 1') according to any one of claims 1 to 10, **characterized in that** each module (2) comprises an indicator light source, adapted to light up when said module is defective.

12. The light-signaling device (1; 1') according to any one of claims 1 to 11, **characterized in that** it comprises a frame (11) adapted to support all of the modules (2) forming the signaling device (1).

13. The light-signaling device (1; 1') according to any one of claims 1 to 12, **characterized in that** each module of the plurality of modules comprises a support (8, 8a, 8c) adapted to receive said electronic board (3, 3a, 3c), and a cap (9, 9a, 9c), adapted to protect said electronic board and the light sources (7) disposed on said board, said cap being configured so as to let light pass.

14. A vehicle comprising a light-signaling device (1; 1') according to any one of the preceding claims, fastened on said vehicle, for example on a roof of said vehicle.
